# EUROPÄISCHE PATENTSCHRIFT

(11) **EP 3 768 989 B1**
(45) Veröffentlichungstag und Bekanntmachung des Hinweises auf die Patenterteilung: **27.09.2023**
(21) Anmeldenummer: 19795106.4
(22) Anmeldetag: 15.10.2019
(51) Int. Cl.: B60K 6/387, B60K 6/442, B60K 6/547, B60K 6/54, B60K 6/48, F16H 3/00, F16H 3/08

(54) **HYBRIDGETRIEBE FÜR KRAFTFAHRZEUG UND KRAFTFAHRZEUG-ANTRIEBSSTRANG**
HYBRID TRANSMISSION FOR MOTOR VEHICLE, AND MOTOR VEHICLE POWERTRAIN
TRANSMISSION HYBRIDE POUR DES VÉHICULES À MOTEUR ET CHAÎNE CINÉMATIQUE DE VÉHICULE À MOTEUR

(30) Priorität: 05.03.2019 DE 102019202973
(43) Veröffentlichungstag der Anmeldung: 27.01.2021
(73) Patentinhaber: ZF Friedrichshafen AG, 88046 Friedrichshafen (DE)
(72) Erfinder: BECK, Stefan, 88097 Eriskirch (DE); KUTTER, Fabian, 88079 Kressbronn (DE); BREHMER, Martin, 88069 Tettnang (DE); HORN, Matthias, 88069 Tettnang (DE); MARTIN, Thomas, 88138 Weissensberg (DE); WECHS, Michael, 88138 Weißensberg (DE); KROH, Thomas, 88045 Friedrichshafen (DE); BAYER, Oliver, 88131 Lindau (DE); ZIEMER, Peter, 88069 Tettnang (DE); KALTENBACH, Johannes, 88048 Friedrichshafen (DE); BACHMANN, Max, 88048 Friedrichshafen (DE)
(74) Vertreter: ZF Friedrichshafen AG
(86) Internationale Anmeldenummer: PCT/EP2019/077892
(87) Internationale Veröffentlichungsnummer: WO 2020/177889

(56) Entgegenhaltungen:
- WO-A1-2020/156731
- CN-A- 108 662 094
- DE-A1-102006 036 758
- DE-A1-102016 007 408
- US-A1- 2002 189 397

## Beschreibung

Die vorliegende Erfindung betrifft ein Hybridgetriebe für einen Kraftfahrzeug-Antriebsstrang sowie einen Kraftfahrzeug-Antriebsstrang mit einem solchen Hybridgetriebe.

Fahrzeuge werden zunehmend mit Hybridantrieben, d. h. mit wenigstens zwei verschiedenen Antriebsquellen ausgestattet. Hybridantriebe können zur Verminderung des Kraftstoffverbrauchs und der Schadstoffemissionen beitragen. Es haben sich weitgehend Antriebsstränge mit einem Verbrennungsmotor und einem oder mehreren Elektromotoren als Parallelhybrid oder als Mischhybrid durchgesetzt. Derartige Hybridantriebe weisen im Kraftfluss eine im Wesentlichen parallele Anordnung des Verbrennungsmotors und des Elektroantriebs auf. Hierbei wird eine Überlagerung der Antriebsmomente als auch eine Ansteuerung mit rein verbrennungsmotorischem Antrieb oder rein elektromotorischem Antrieb ermöglicht. Da sich die Antriebsmomente des Elektroantriebs und des Verbrennungsmotors je nach Ansteuerung addieren können, ist eine vergleichsweise kleinere Auslegung des Verbrennungsmotors und/oder dessen zeitweise Abschaltung möglich, wodurch eine signifikante Reduzierung der CO2-Emissionen ohne nennenswerte Leistungs- bzw. Komforteinbußen erreicht werden kann. Die Möglichkeiten und Vorteile eines Elektroantriebes können somit mit den Reichweiten-, Leistungs- und Kostenvorteilen von Brennkraftmaschinen verbunden werden.

Ein Nachteil der oben genannten Hybridantriebe besteht in einem im Allgemeinen komplexeren Aufbau, da beide Antriebsquellen vorzugsweise mit nur einem Getriebe Antriebsleistung auf eine Antriebswelle übertragen. Ferner können einzelne Gangstufen teilweise nur von einer Antriebsquelle verwendet werden. Eine Reduzierung der Komplexität im Aufbau eines Hybridgetriebes geht meistens mit einer Einbuße an Variabilität einher.

Aus der Druckschrift DE 10 2010 030 573 A1 ist ein Hybridantrieb bekannt mit einem automatisierten Schaltgetriebe, beispielsweise für ein Kraftfahrzeug, mit einem Verbrennungsmotor, der mit wenigstens einer ersten Getriebeeingangswelle bunden ist und mit einem Elektroantrieb, der wenigstens eine Elektromaschine aufweist, die mit einer zweiten Getriebeeingangswelle triebverbunden ist. Die beiden Getriebeeingangswellen sind koaxial zueinander angeordnet, wobei eine Gangschaltvorrichtung in einer ihrer Schaltstellungen die beiden Getriebeeingangswellen antriebswirksam miteinander verbindet und in einer anderen Schaltstellung einen Gang schaltet.

In der Druckschrift DE 10 2016 007 408 A1 ist ein Doppelkupplungsgetriebe vorgeschlagen, umfassend eine erste Eingangswelle und eine erste Reibkupplung, die jeweils einem ersten Teilgetriebe zugeordnet sind, eine zweite Eingangswelle und eine zweite Reibkupplung, die jeweils einem zweiten Teilgetriebe zugeordnet sind und eine Mehrzahl von Radpaarungen. Jeder Radpaarung ist ein Festrad und ein mit dem Festrad formschlüssig in Eingriff stehendes Losrad zugeordnet. Die Festräder, die den Radpaarungen zugeordnet sind, sind wahlweise jeweils mit der ersten Eingangswelle oder der zweiten Eingangswelle drehfest verbunden. Das Doppelkupplungsgetriebe umfasst ferner eine erste Abtriebswelle, wobei ein Ritzel der ersten Abtriebswelle mit einem Zahnkranz eines Differentials formschlüssig in Eingriff steht. Das Doppelkupplungsgetriebe umfasst zudem eine zweite Abtriebswelle, wobei ein Ritzel der zweiten Abtriebswelle mit dem Zahnkranz des Differentials formschlüssig in Eingriff steht, und wobei alle den Radpaarungen zugeordneten Losräder auf der ersten Abtriebswelle axial verteilt angeordnet sind.

Aus der Offenlegungsschrift DE 10 2006 036 758 A1 ist ein automatisiertes Doppelkupplungsgetriebe eines Kraftfahrzeuges bekannt. Das Getriebe umfasst zwei koaxial oder achsparallel angeordneten Eingangswellen, mindestens eine achsparallel zu den Eingangswellen angeordnete Abtriebswelle und unsynchronisierte Gangkupplungen. Jeder der Eingangswellen sind zur Verbindung mit der Antriebswelle eines Antriebsmotors jeweils eine separate Motorkupplung und zur Verbindung mit der Abtriebswelle jeweils eine Gruppe von unterschiedlich übersetzten Gang-Zahnradsätzen zugeordnet. Die Gang-Zahnradsätze umfassen jeweils ein Festrad und ein über eine zugeordnete Gangkupplung schaltbares Losrad. Zur Vereinfachung des Aufbaus und der Steuerbarkeit sind die beiden Motorkupplungen als unsynchronisierte Klauenkupplungen ausgebildet. Ferner sind als Anfahr- und Synchronisiermittel zwei Elektromaschinen vorgesehen, die wechselweise jeweils mit einer der beiden Eingangswellen in Triebverbindung stehen.

Die Offenlegungsschrift CN 108 662 094 A betrifft ein Hybridgetriebe, ein Hybridantriebssystem und ein Hybridfahrzeug. Das Hybridgetriebe umfasst eine Eingangswelle, eine Zwischenwelle und eine Ausgangswelle, wobei die Zwischenwelle zum Übertragen von Antriebsleistung zwischen der Eingangswelle und der Ausgangswelle verwendet wird. Das Hybridgetriebe umfasst ferner ein erstes Zahnrad, ein zweites Zahnrad und ein drittes Zahnrad, die als Losräder ausgebildet und auf der Eingangswelle angeordnet sind. Das erste Zahnrad und das zweite Zahnrad sind in axialer Richtung benachbart angeordnet und rotieren synchron. Eine erste Synchronisierung ist auf der Eingangswelle angeordnet, wobei die erste Synchronisierung zwischen dem zweiten Zahnrad und dem dritten Zahnrad angeordnet ist und mit dem zweiten Zahnrad oder dem dritten Zahnrad verbindbar ist. Ein viertes Zahnrad und ein fünftes Zahnrad sind auf der Zwischenwelle angeordnet, und das vierte Zahnrad und das fünfte Zahnrad kämmen jeweils mit dem zweiten Zahnrad und dem dritten Zahnrad. Ein sechstes Zahnrad und ein siebtes Zahnrad sind auf der Ausgangswelle angeordnet, wobei das sechste Zahnrad und das siebte Zahnrad jeweils mit dem ersten Zahnrad und dem zweiten Zahnrad kämmen.

Nachteilig bei bisherigen Ansätzen ist, dass der elektrischen Antriebsmaschine nur ein Teil der Gangstufen zugeordnet werden kann. Oftmals sind die niedrigen Gangstufen für die elektrische Antriebsmaschine vorteilhaft, da elektrische Maschinen mit hohen Drehzahlen betrieben werden können. Das Potential der elektrischen Antriebsmaschine lässt sich in den niedrigen Gangstufen optimal ausschöpfen. Jedoch steht ein Teil der niedrigen Gangstufen der elektrischen Antriebsmaschine nicht zur Verfügung.

Vor diesem Hintergrund stellt sich der vorliegenden Erfindung die Aufgabe, ein Hybridgetriebe und einen Antriebsstrang bereit zu stellen mit einer besseren Kombinierbarkeit der verbrennungsmotorischen und elektromotorischen Gangstufen. Insbesondere sollen ein Hybridgetriebe und ein Antriebsstrang geschaffen werden, die sich aufgrund ihrer Eigenschaften hinsichtlich geringen Bauraums, hoher Variabilität und effizienter Herstellbarkeit für einen Serieneinsatz im Automobilbau eignen. Vorzugsweise sollen die niedrigen Gangstufen, die der elektrischen Antriebsmaschine zugeordnet werden können, einen geringen Gangsprung aufweisen.

Zum Lösen dieser Aufgabe betrifft die Erfindung ein Hybridgetriebe für einen Kraftfahrzeug-Antriebsstrang mit einer Verbrennungsmaschine und einer elektrischen Antriebsmaschine, mit:
einem ersten Teilgetriebe mit mehreren Gangstufen und einer ersten Getriebeeingangswelle-,
einem zweiten Teilgetriebe mit mehreren Gangstufen und einer zweiten Getriebeeingangswelle;
einer Vorgelegewelle;
mehreren Schaltelementen zum Einlegen der Gangstufen;
einem ersten Koppelelement und einem zweiten Koppelelement zum Wirkverbinden von Wellen im Hybridgetriebe; und
in mehreren Radsatzebenen angeordneten Zahnradpaaren von Losrädern und Festrädern zum Bilden der Gangstufen, wobei
ein Teil der Gangstufen für die Verbrennungsmaschine einlegbar ist und ein Teil der Gangstufen für die elektrische Antriebsmaschine einlegbar ist;
die Zahnradpaare zum Bilden der Gangstufen mit der niedrigsten und zweitniedrigsten Übersetzung dem ersten Teilgetriebe fest zugeordnet sind, sodass die Gangstufen Antriebsleistung übersetzen, die nur mittels der ersten Getriebeeingangswelle in das Hybridgetriebe eingebracht wird;
die erste Getriebeeingangswelle mittels des ersten Koppelelements und die zweite Getriebeeingangswelle mittels des zweiten Koppelelements mit der Verbrennungsmaschine wirkverbindbar sind; und
das erste und das zweite Koppelelement als formschlüssige Koppelelemente ausgebildet sind.

Die obige Aufgabe wird ferner gelöst von einem Kraftfahrzeug-Antriebsstrang mit:
einer Verbrennungsmaschine zum Bereitstellen von Antriebsleistung;
einer elektrischen Antriebsmaschine zum Bereitstellen von Antriebsleistung; und
einem Hybridgetriebe wie oben beschrieben.

Bevorzugte Ausgestaltungen der Erfindung werden in den abhängigen Ansprüchen beschrieben. Insbesondere kann der Kraftfahrzeug-Antriebsstrang entsprechend der für das Hybridgetriebe in den abhängigen Ansprüchen beschriebenen Ausgestaltungen ausgeführt sein.

Die vorzugsweise als Hauptfahrmaschine eingesetzte elektrische Antriebsmaschine kann hierbei die Gangstufen mit der niedrigsten und zweitniedrigsten Übersetzung nutzen. Das ist insbesondere vorteilhaft in Sonderfällen, wie beispielsweise bei hohem Fahrtwiderstand. Hierbei kann die elektrische Antriebsmaschine den ersten Gang, also die niedrigste Übersetzungsstufe, im ersten Teilgetriebe nutzen. Bei einem rein elektrischen Fahrbetrieb kann die elektrische Antriebsmaschine die beiden niedrigsten Gangstufen nutzen und mit hohem Wirkungsgrad betrieben werden. Die bevorzugte Bauweise ist eine Anordnung in Front-Quer- oder Heck-Quer-Bauweise, also mit einem seitlichen Abtrieb.

In einer bevorzugten Ausgestaltung weist das Hybridgetriebe fünf Gangstufen auf, wobei alle Gangstufen für die Verbrennungsmaschine und die elektrische Antriebseinlegbar sind. Durch das Vorsehen von fünf Gangstufen kann das Hybridgetriebe gewichts- und kosteneffizient ausgeführt werden. Das Hybridgetriebe weist einen geringen Bauraumbedarf auf, sodass auch eine Anwendung für Kleinfahrzeuge möglich ist. Durch die Kombinierbarkeit der Gangstufen kann eine hohe Variabilität und Effizienz des Hybridgetriebes erreicht werden, insbesondere können wenigstens drei Gangstufen der ersten elektrischen Antriebsmaschine zur Verfügung gestellt werden. Vorzugsweise sind keine Windungsgangstufen vorgesehen. Die Belastung der Bauteile ist minimiert.

In einer bevorzugten Ausgestaltung ist ein Zahnradpaar der Gangstufen größer als die zweite Gangstufe an einem anderen Teilgetriebe angeordnet als die Zahnradpaare benachbarter Gangstufen. Hierdurch kann ein zugkraftverlustfreies Schalten in den höheren Gangstufen erreicht werden. Ein Gangwechsel wird komfortabler durchgeführt. Das Kraftfahrzeug beschleunigt schneller und das Hybridgetriebe schaltet effizienter.

In einer weiteren bevorzugten Ausgestaltung ist das erste Teilgetriebe und/oder das zweite Teilgetriebe dazu ausgebildet, einen Kraftübertragungspfad mit der elektrischen Antriebsmaschine und/oder einer weiteren elektrischen Antriebsmaschine einzurichten. Es wird eine technisch einfache Anbindung der elektrischen Antriebsmaschine an das Hybridgetriebe erreicht. Der Bauteilbedarf für das Hybridgetriebe kann gering bleiben. Ferner kann die weitere elektrische Antriebsmaschine zum Anschleppen der Verbrennungsmaschine verwendete werden, sodass gegebenenfalls auf einen Startermotor für die Verbrennungsmaschine verzichtet werden kann. Es kann ein serieller Fahrbetrieb eingerichtet werden, bei dem die Verbrennungsmaschine die weitere elektrische Antriebsmaschine antreibt, um die elektrische Antriebsmaschine mit Energie zu versorgen. Ferner kann die weitere elektrische Antriebsmaschine die Verbrennungsmaschine bei einer Synchronisation für Gangwechsel in einem Hybridfahrbetrieb unterstützen.

In einer weiteren bevorzugten Ausgestaltung des oben bezeichneten Hybridgetriebes ist das erste Teilgetriebe und/oder das zweite Teilgetriebe dazu ausgebildet, den Kraftübertragungspfad an dem Festrad des Radpaares, das die höchste Gangstufe auf dem ersten und/oder zweiten Teilgetriebe bildet, einzurichten. Auf diese Weise kann vorzugsweise ohne weitere Übersetzungsstufen ein hohes Übersetzungsverhältnis für die elektrische Antriebsmaschine erreicht werden. Das Getriebe baut leicht und wenig kompliziert, da weniger Bauteile verwendet werden müssen.

In einer weiteren bevorzugten Ausgestaltung des oben bezeichneten Hybridgetriebes ist ein an einem axialen Ende des Hybridgetriebes angeordnetes Festrad dazu ausgebildet, einen Kraftübertragungspfad mit der elektrischen Antriebsmaschine und/oder der weiteren elektrischen Antriebsmaschine einzurichten. Auf diese Weise kann eine axial lange elektrische Antriebsmaschine mit hoher Leistung verbaut werden. Das Hybridgetriebe bleibt kompakt und ein Antriebsstrang mit einem solchen Hybridgetriebe kann leistungsstark und effizient sein.

In einer weiteren bevorzugten Ausgestaltung weist das Losrad der ersten und/oder der zweiten Gangstufe mit einem weiteren gangbildenden Zahnradpaar zusammen ein gemeinsames Schaltelement auf. Alternativ oder ergänzend dazu sind die Schaltelemente als formschlüssige Schaltelemente ausgeführt. Weiterhin ergänzend oder alternativ sind wenigstens zwei Schaltelemente als Doppelschaltelemente ausgebildet, die von einem doppeltwirkenden Aktuator betätigbar sind. Durch das Vorsehen von Doppelschaltelementen kann die Ansteuerung bei Gangwechseln vereinfacht sein. Zudem kann die Anzahl der zur Steuerung des Hybridgetriebes benötigten Aktuatoren geringgehalten werden. Das Hybridgetriebe hat einen geringen Bauaufwand. Durch das Vorsehen von formschlüssigen Schaltelementen kann das Hybridgetriebe kosteneffizient und weniger fehleranfällig ausgeführt werden.

Das Hybridgetriebe weist ein erstes Koppelelement und ein zweites Koppelelement zum Wirkverbinden von Wellen im Hybridgetriebe auf. Die erste Getriebeeingangswelle ist mittels des ersten Koppelelements und die zweite Getriebeeingangswelle ist mittels des zweiten Koppelelements mit der Verbrennungsmaschine wirkverbindbar. Das erste und das zweite Koppelelement sind als formschlüssige Koppelelemente ausgebildet. Durch das Wirkverbinden der ersten und/oder der zweiten Getriebeeingangswelle mit der Verbrennungsmaschine sind alle Gangstufen für die Verbrennungsmaschine verwendbar. Die Verbrennungsmaschine kann effizient betrieben werden.

In einer besonders bevorzugten Ausgestaltung sind das erste und das zweite Koppelelement von einem doppeltwirkenden Aktuator betätigbar. Dadurch, dass die Koppelelemente von einem doppeltwirkenden Aktuator betätigbar sind, kann die Anzahl der zur Steuerung des Hybridgetriebes benötigten Aktuatoren geringgehalten werden. Das Hybridgetriebe kann kosteneffizient und weniger fehleranfällig ausgeführt werden.

In einer bevorzugten Ausgestaltung weist das Hybridgetriebe ein Verbindungselement zum antriebswirksamen Verbinden der ersten Getriebeeingangswelle und der zweiten Getriebeeingangswelle auf. Auf diese Weise sind alle Gangstufen für die elektrische Antriebsmaschine verwendbar. Das Hybridgetriebe ist variabel einsetzbar.

In einer bevorzugten Ausgestaltung sind die erste Getriebeeingangswelle und die zweite Getriebeeingangswelle koaxial zueinander angeordnet. Eine der Getriebeeingangswellen ist dabei als Hohlwelle ausgebildet und umgibt zumindest abschnittsweise die andere Getriebeeingangswelle. Hierdurch kann das Getriebe kompakt ausgeführt werden. Ferner kann durch die vorteilhafte Anordnung der Getriebeeingangswellen eine gemeinsame Vorgelegewelle verwendet werden, was den Zusammenbau des Hybridgetriebes vereinfacht.

In einer bevorzugten Ausgestaltung weist der Kraftfahrzeug-Antriebsstrang eine weitere elektrische Antriebsmaschine zum Bereitstellen von Antriebsleistung auf. Hierdurch kann die Verbrennungsmaschine kleiner dimensioniert werden, da eine Unterstützung durch die weitere elektrische Antriebsmaschine erfolgen kann. Ein Verbrauch von fossilen Brennstoffen kann reduziert werden.

In einer bevorzugten Ausgestaltung ist die elektrische Antriebsmaschine und/oder die weitere elektrische Antriebsmaschine achsparallel zu der ersten und/oder zweiten Getriebeeingangswelle angeordnet. Hierdurch kann die Anbindung an den Kraftfahrzeug-Antriebsstrang vereinfacht sein. Zudem kann der Antriebsstrang kompakt bauen.

Ein Gangstufenwechsel erfolgt durch Abschalten eines Schaltelementes und gleichzeitiges Aufschalten des Schaltelementes für die nächsthöhere oder -niedrigere Gangstufe. Das zweite Schaltelement übernimmt also Stück für Stück das Drehmoment vom ersten Schaltelement bis am Ende des Gangstufenwechsels das gesamte Drehmoment vom zweiten Schaltelement übernommen wird. Bei vorheriger Synchronisation kann ein Gangwechsel schneller erfolgen.

Ein Koppelelement ist vorliegend als ein Bauteil zu verstehen, das eine Antriebsmaschine, wie einen Verbrennungsmotor oder eine elektrische Antriebsmaschine, mit einer Welle, vorzugsweise eine Getriebeeingangswelle lösbar wirkverbinden kann.

Ein Verbindungselement ist vorliegend ein Bauteil, das zwei Wellen lösbar wirkverbinden kann.

Unter Anschleppen der Verbrennungsmaschine ist das Anlassen bzw. das In-Drehung-Versetzen der Verbrennungsmaschine zu verstehen. Das Anschleppen erfolgt dabei durch zumindest teilweises Schließen einer Reibkupplung bei einer eingelegten Gangstufe und eingeschalteter Zündung, wobei der 'Schwung' eines sich in Bewegung befindenden Fahrzeuges, also die kinetische Bewegungsenergie, durch den Kraftübertragungsstrang auf die Verbrennungsmaschine übertragen wird.

Eine Verbrennungsmaschine kann vorliegend jede Maschine sein, die durch Verbrennen eines Antriebsmittels, wie Benzin, Diesel, Kerosin, Ethanol, Flüssiggas, Autogas, etc. eine Drehbewegung erzeugen kann. Eine Verbrennungsmaschine kann beispielsweise ein Ottomotor, ein Dieselmotor, ein Wankelmotor oder ein Zweitaktmotor sein.

Ein Aktuator ist vorliegend ein Bauteil, das ein elektrisches Signal in eine mechanische Bewegung umsetzt. Vorzugsweise führen Aktuatoren, die mit Doppelschaltelementen verwendet werden, Bewegungen in zwei entgegengesetzte Richtungen aus, um in der ersten Richtung ein Schaltelement des Doppelschaltelements zu schalten und in der zweiten Richtung das andere Schaltelement zu schalten.

Unter Gangsprung ist der Unterscheid in der Übersetzung zweier, vorzugsweise benachbarter, Gangstufen zu verstehen. Ein niedriger Gangsprung bedeutet, dass sich die Übersetzung der Gangstufen wenig unterscheidet. Gangsprünge zwischen benachbarten Gangstufen sind demnach geringer als Gangsprünge, bei denen eine Gangstufe ausgelassen wird.

Unter seriellem Fahren ist ein Betriebsmodus zu verstehen, bei dem die Verbrennungsmaschine als Antrieb für eine als Generator betriebene elektrische Antriebsmaschine dient, die eine weitere elektrische Antriebsmaschine speist, sodass die Verbrennungsmaschine von den Antriebsrädern entkoppelt ist und vorzugsweise ständig in einem einzigen emissionsgünstigen Betriebspunkt betrieben werden kann.

Unter einer festen Zuordnung von Zahnradpaaren zum Bilden einer Gangstufe zu einem Teilgetriebe ist zu verstehen, dass die gebildete Gangstufe nur zur Übersetzung von Antriebsleistung verwendet werden kann, wenn die Antriebsleistung über die entsprechende Getriebeeingangswelle des Teilgetriebes in das Getriebe eingebracht wird.

Die Erfindung wird nachfolgend anhand einiger ausgewählter Ausführungsbeispiele im Zusammenhang mit den beiliegenden Zeichnungen näher beschrieben und erläutert. Es zeigen:
Fig. 1 eine schematische Darstellung einer Ausführungsform eines erfindungsgemäßen Hybridgetriebes in einer ersten Variante;
Fig. 2 eine schematische Darstellung einer Schaltmatrix des erfindungsgemä-ßen Hybridgetriebes der Fig. 1;
Fig. 3 eine schematische Darstellung einer Ausführungsform eines erfindungsgemäßen Hybridgetriebes;
Fig. 4 eine schematische Darstellung einer Schaltmatrix des erfindungsgemä-ßen Hybridgetriebes der Fig. 3;
Fig. 5 eine schematische Darstellung einer Ausführungsform eines erfindungsgemäßen Hybridgetriebes in einer zweiten Variante;
Fig. 6 eine schematische Darstellung einer Ausführungsform eines erfindungsgemäßen Hybridgetriebes in einer dritten Variante;
Fig. 7 eine schematische Darstellung einer Schaltmatrix des erfindungsgemä-ßen Hybridgetriebes der Fig. 6; und
Fig. 8 eine schematische Darstellung einer Ausführungsform eines erfindungsgemäßen Hybridgetriebes in einer vierten Variante.

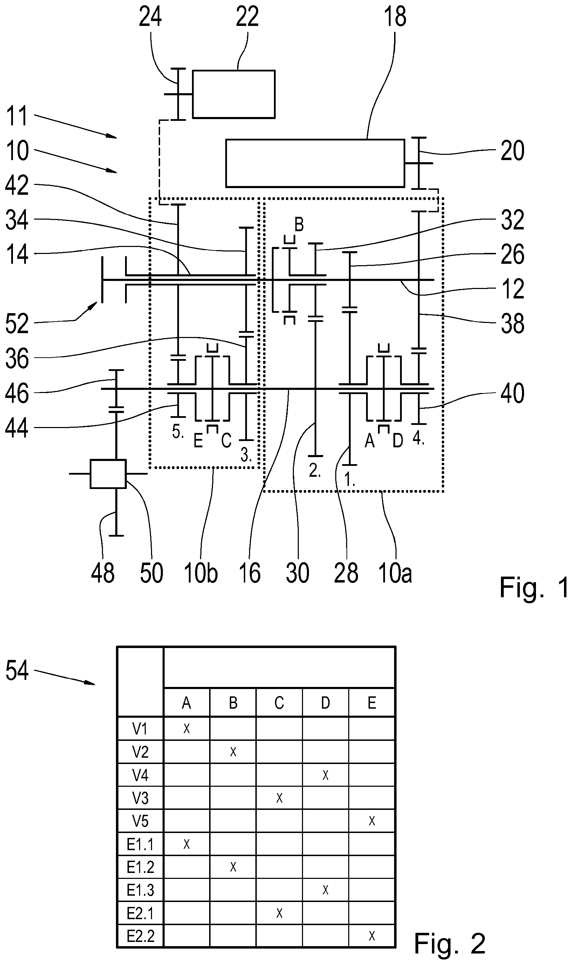

Fig. 1 zeigt schematisch eine Ausführungsform eines Hybridgetriebes 10 in einem Antriebsstrang 11 mit einer ersten Getriebeeingangswelle 12 und einer zweiten Getriebeeingangswelle 14 sowie einer Vorgelegewelle 16. Die erste Getriebeeingangswelle 12 ist als Vollwelle ausgebildet. Die zweite Getriebeeingangswelle 14 ist als Hohlwelle ausgebildet und umgibt die erste Getriebeeingangswelle 12 zumindest abschnittsweise.

Der Antriebsstrang 11 weist ferner eine erste elektrische Maschine 18 auf. An einer Ausgangswelle der elektrischen Antriebsmaschine 18 ist ein Festrad 20 angeordnet, um die elektrische Antriebsmaschine 18 antriebswirksam mit dem Hybridgetriebe 10 zu verbinden. Der Antriebsstrang 11 weist ferner eine weitere elektrische Antriebsmaschine 22 auf, an deren Ausgangswelle ein Festrad 24 angeordnet ist, um die weitere elektrische Antriebsmaschine 22 mit dem Hybridgetriebe 10 antriebswirksam zu verbinden.

Das Hybridgetriebe 10 umfasst ein erstes Teilgetriebe 10a und ein zweites Teilgetriebe 10b, die durch gestrichelte Kästchen dargestellt sind. Das Hybridgetriebe 10 weist insgesamt fünf Gangstufen auf, die jeweils durch ein Zahnradpaar, bestehend aus einem Losrad und einem Festrad, gebildet sind. Ein Festrad 26 der ersten Gangstufe ist auf der ersten Getriebeeingangswelle 12 angeordnet und in Eingriff mit einem Losrad 28. Das Losrad 28 ist auf der Vorgelegewelle 16 angeordnet und kann mittels des Schaltelements A antriebswirksam mit der Vorgelegewelle 16 verbunden werden. Das Festrad 30 der zweiten Gangstufe ist auf der Vorgelegewelle 16 angeordnet und in Eingriff mit einem Losrad 32, das auf der ersten Getriebeeingangswelle angeordnet ist. Das Losrad 32 kann mittels des Schaltelements B antriebswirksam mit der ersten Getriebeeingangswelle 12 verbunden werden. Ein Festrad 34 der dritten Gangstufe ist auf der zweiten Getriebeeingangswelle 14 angeordnet und in Eingriff mit einem Losrad 36, das auf der Vorgelegewelle 16 angeordnet ist. Das Losrad 36 kann mittels des Schaltelements C antriebswirksam mit der Vorgelegewelle 16 verbunden werden. Das Festrad 38 der vierten Gangstufe ist an der ersten Getriebeeingangswelle 12 angeordnet und in Eingriff mit einem Losrad 40. Das Losrad 40 ist an der Vorgelegewelle 16 angeordnet und kann mittels des Schaltelements D antriebswirksam mit der Vorgelegewelle 16 verbunden werden. Das Festrad 38 ist zudem dazu ausgebildet, einen Kraftübertragungspfad mit der elektrischen Antriebsmaschine 18 einzurichten, vorzugsweise mittels eines Eingriffs mit dem Festrad 20. Ein Festrad 42 der fünften Gangstufe ist an der zweiten Getriebeeingangswelle 14 angeordnet und in Eingriff mit einem Losrad 44, das an der Vorgelegewelle 16 angeordnet ist. Das Losrad 44 kann mittels des Schaltelements E mit der Vorgelegewelle 16 antriebswirksam verbunden werden. Das Festrad 42 ist zudem dazu ausgebildet, einen Kraftübertragungspfad mit der weiteren elektrischen Antriebsmaschine 22 einzurichten, vorzugsweise mittels eines Eingriffs mit dem Festrad 24, wie durch die gestrichelte Linie angedeutet.

An der Vorgelegewelle 16 ist zudem ein erstes Abtriebszahnrad 46 in Form eines Festrads angeordnet, das in Eingriff mit einem zweiten Abtriebszahnrad 48 ist und den Abtrieb bildet. Das zweite Abtriebszahnrad 48 ist antriebswirksam mit einem Differential 50 verbunden, um Antriebsleistung von einem Getriebeeingang 52, der elektrischen Antriebsmaschine 18 und/oder der weiteren elektrischen Antriebsmaschine 22 auf die Antriebsräder eines Kraftfahrzeugs zu übertragen.

Die Schaltelemente E, C sind zu einem Doppelschaltelement EC zusammengefasst. Die Schaltelemente A, D sind zu einem Doppelschaltelement AD zusammengefasst. Die Zahnräder und Schaltelemente der Gangstufen 1, 2 und 4 sind in einem ersten Teilgetriebe 10a angeordnet. Die Zahnräder und Schaltelemente der Gangstufen 3 und 5 sind in einem zweiten Teilgetriebe 10b angeordnet. Die Zahnräder sind vorzugsweise als Stirnräder ausgebildet.

Fig. 2 zeigt ein Schaltschema 54 des Hybridgetriebes der Fig. 1. In der ersten Spalte sind die Verbrennungsgangstufen V1 bis V5 der Verbrennungsmaschine 55 sowie die Elektrogangstufen E1.1 bis E1.3 der elektrischen Antriebsmaschine 18 und die Elektrogangstufen E2.1 bis E2.2 der weiteren elektrischen Antriebsmaschine 22 benannt. Aus dem Schaltschema 54 ist folglich zu erkennen, welche der Gangstufen 1 bis 5 des Hybridgetriebes 10, welcher der Verbrennungsgangstufen V1 bis V5 und welcher der Elektrogangstufen E1.1 bis E1.3 bzw. E2.1 bis E2.2 entspricht. In der zweiten bis sechsten Spalte sind die Schaltzustände der einzelnen Schaltelemente A bis E gezeigt, wobei ein "X" bedeutet, dass das Schaltelement geschlossen ist, also das ihm zugeordnete Losrad mit der ihm zugeordneten Welle antriebswirksam verbindet. Für die Verbrennungsgangstufe V1 ist das Schaltelement A geschlossen. Für die Verbrennungsgangstufe V2 ist das Schaltelement B geschlossen. Für die Verbrennungsgangstufe V3 ist das Schaltelement C geschlossen. Für die Verbrennungsgangstufe V4 ist das Schaltelement D geschlossen. Für die Verbrennungsgangstufe V5 ist das Schaltelement E geschlossen.

Für die Elektrogangstufe E1.1 der elektrischen Antriebsmaschine 18 ist das Schaltelement A geschlossen. Für die zweite Elektrogangstufe E1.2 der elektrischen Antriebsmaschine 18 ist das Schaltelement B geschlossen. Für die dritte Elektrogangstufe E1.3 der elektrischen Antriebsmaschine 18 ist das Schaltelement D geschlossen. Für die erste Elektrogangstufe E2.1 der weiteren elektrischen Antriebsmaschine 22 ist das Schaltelement C geschlossen. Für die zweite Elektrogangstufe E2.2 der weiteren elektrischen Antriebsmaschine 22 ist das Schaltelement E geschlossen.

Es versteht sich, dass die anderen Schaltelemente, die nicht explizit als geschlossen bezeichnet wurden, in der entsprechenden Konfiguration als offen anzusehen sind. Diese anderen Schaltelemente verbinden also das dem Schaltelement zugeordnete Losrad nicht mit der dem Schaltelement zugeordneten Welle. Es versteht sich weiter, dass die Elektrogangstufen und die Verbrennungsgangstufen in einem HybridFahrbetrieb miteinander kombiniert werden können, es kann also beispielsweise in der Verbrennungsgangstufe V2 gefahren werden und zusätzlich auch in der zweiten Elektrogangstufe E1.2 der elektrischen Antriebsmaschine 18. Hierzu wäre lediglich das Schaltelement B zu schließen.

In einem rein elektrischen Fahrbetrieb kann die elektrische Antriebsmaschine 18 Antriebsleistung mittels der Elektrogangstufen E1.1 bis E1.3 übertragen, also die Gangstufen des ersten, zweiten und vierten Ganges zur Leistungsübertragung verwenden. Zusätzlich oder alternativ dazu kann die weitere elektrische Antriebsmaschine 22 Antriebsleistung mittels der Elektrogangstufen E2.1 und E2.2 übertragen, also die dritte und fünfte Gangstufe zur Leistungsübertragung verwenden.

In einem Hybridfahrbetrieb überträgt die elektrische Antriebsmaschine 18 Antriebsleistung mittels der Elektrogangstufen E1.1 bis E1.3. Zusätzlich oder alternativ dazu überträgt die weitere elektrische Antriebsmaschine 22 Antriebsleistung mittels der Elektrogangstufen E2.1 oder E2.2. Zusätzlich überträgt eine am Getriebeeingang mit der ersten Getriebeeingangswelle 12 oder zweiten Getriebeeingangswelle 14 verbindbare Verbrennungsmaschine 55 Antriebsleistung mittels der Verbrennungsgangstufen V1 bis V5. Beim Übertragen von Antriebsleistung der Verbrennungsmaschine mittels der Verbrennungsgangstufen V1, V2 und V4 ist die Verbrennungsmaschine mit der ersten Getriebeeingangswelle 12 antriebswirksam verbunden. Beim Übertragen mittels der Verbrennungsgangstufen V3 oder V5 ist die Verbrennungsmaschine mit der zweiten Getriebeeingangswelle 14 verbunden.

In einem rein verbrennungsmotorischen Fahrbetrieb kann die Verbrennungsmaschine Antriebsleistung mittels der Verbrennungsgangstufen V1 bis V5 übertragen. Die elektrischen Antriebsmaschinen 18, 22 werden dabei vorzugsweise nicht betrieben.

Es ist auch denkbar, einen sogenannten seriellen Fahrbetrieb einzurichten, bei dem die Verbrennungsmaschine die weitere elektrische Antriebsmaschine 22 antreibt. Dabei wird die Verbrennungsmaschine 55 mit der zweiten Getriebeeingangswelle 14 verbunden und schleppt die weitere elektrische Antriebsmaschine 22 mit, die als Dynamo betrieben wird. Die so erzeugte Energie kann dann der elektrischen Antriebsmaschine 18 zugeführt werden, wobei die elektrische Antriebsmaschine 18 mittels der Elektrogangstufen E1.1 bis E1.3Antriebsleistung zur Verfügung stellt.

Gleiche Bezugszeichen beziehen sich auf gleiche Merkmale und werden im Folgenden nicht näher erläutert. Es werden die Unterschiede in den Ausgestaltungen näher erläutert.

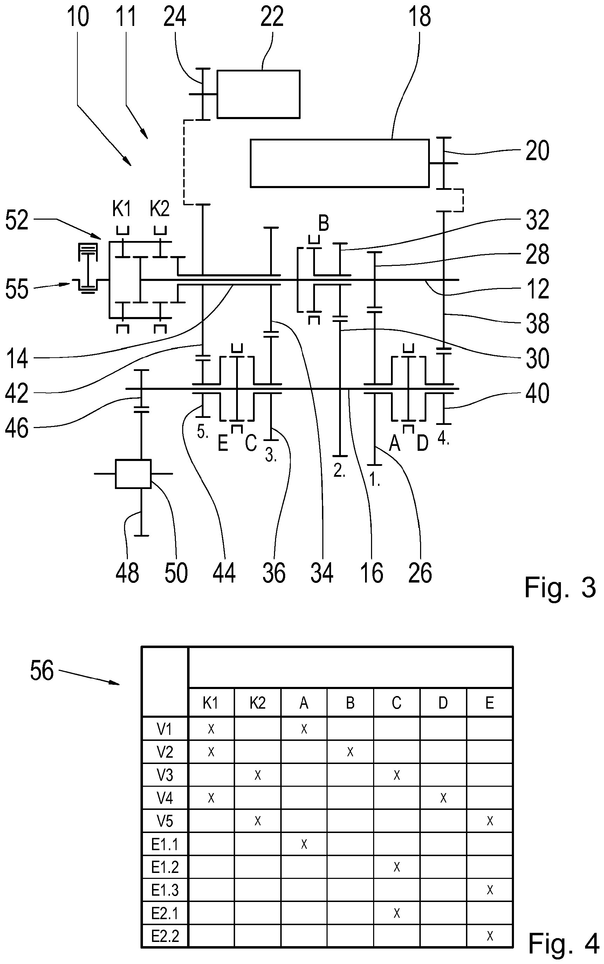

In Fig. 3 ist eine Variante eines erfindungsgemäßen Hybridgetriebes 10 in einem Antriebsstrang 11 gezeigt. In Ergänzung zu dem in Fig. 1 gezeigten Hybridgetriebe 10 ist am Getriebeeingang 52 ein erstes Koppelelement K1 und ein zweites Koppelelement K2 gezeigt. Ferner ist die Verbrennungsmaschine 55 am Getriebeeingang gezeigt. Mittels des Koppelelements K1 kann die Verbrennungsmaschine 55 antriebswirksam mit der ersten Getriebeeingangswelle 12 verbunden werden. Mittels des zweiten Koppelelements K2 kann die Verbrennungsmaschine 55 antriebswirksam mit der zweiten Getriebeeingangswelle 14 verbunden werden.

In Fig. 4 ist schematisch ein Schaltschema 56 der in Fig. 3 gezeigten Ausführungsform des Hybridgetriebes 10 in dem Antriebsstrang 11 gezeigt. In den ersten beiden Spalten des Schaltschemas 56 sind die Schaltzustände der Koppelelemente K1 und K2 gezeigt. In den Spalten 3 bis 7 sind die Schaltzustände der Schaltelemente A bis E gezeigt.

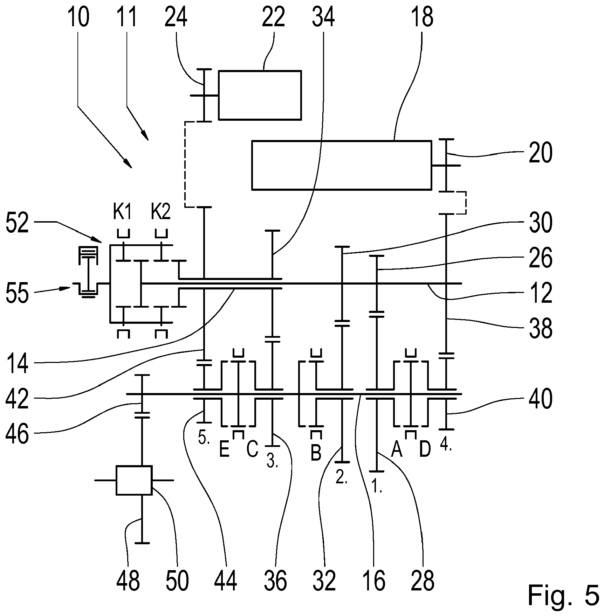

In Fig. 5 ist schematisch eine zweite Variante eines erfindungsgemäßen Hybridgetriebes 10 in einem Antriebsstrang 11 gezeigt. Im Unterschied zu den in den Figuren 1 und 3 gezeigten Ausführungsformen ist das Schaltelement B auf der Vorgelegewelle 16 angeordnet. Zudem ist das Losrad 32 der zweiten Gangstufe auf der Vorgelegewelle 16 angeordnet, wobei das Festrad 30 der zweiten Gangstufe auf der ersten Getriebeeingangswelle 12 angeordnet ist. Das in Fig. 4 gezeigte Schaltschema 56 kann folglich die Schaltzustände der in Fig. 5 gezeigten Ausführungsform beschreiben. Es versteht sich, dass auch andere Schaltelemente sowie die zugeordneten Losräder und Festräder entsprechend getauscht werden können, also beispielsweise von der Vorgelegewelle 16 auf die erste Getriebeeingangswelle 12 oder die zweite Getriebeeingangswelle 14.

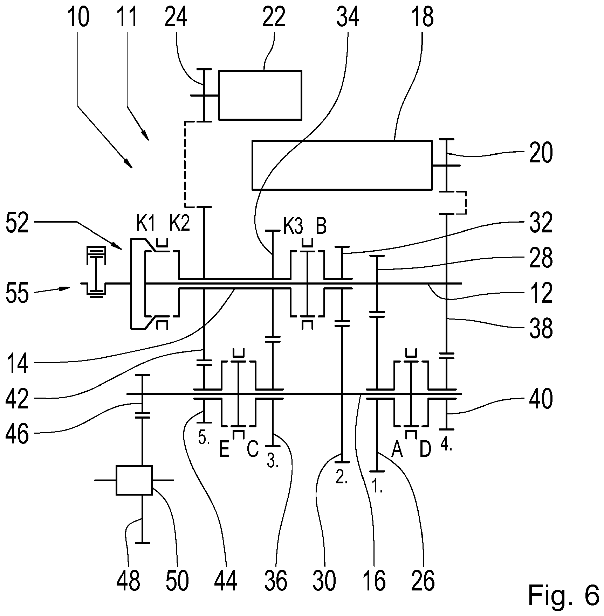

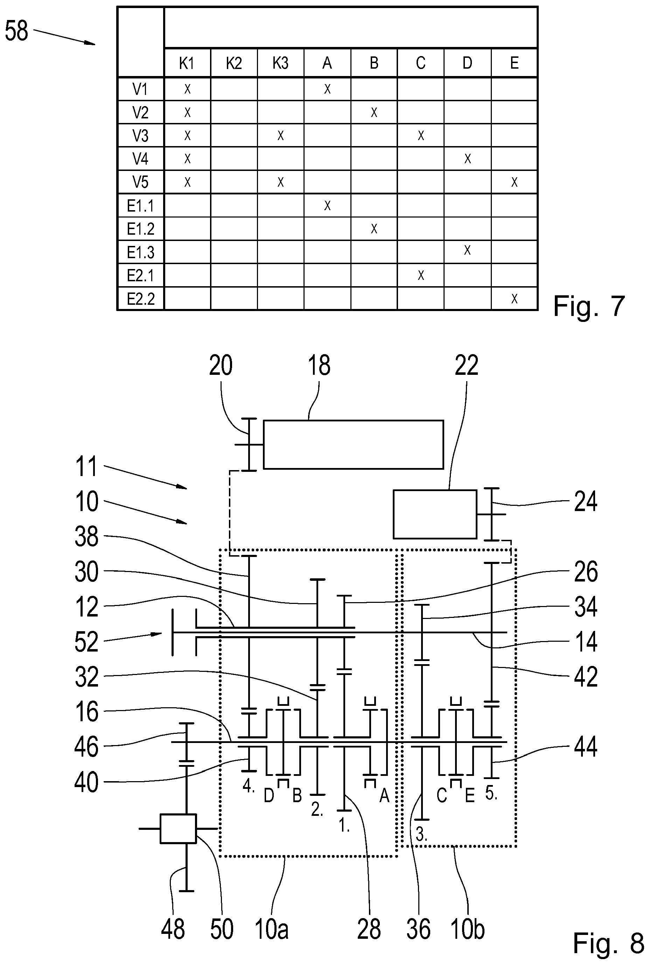

In Fig. 6 ist schematisch eine dritte Variante eines nicht unter den Gegenstand des Schutzbegehrens fallenden Hybridgetriebes 10 in einem Antriebsstrang 11 gezeigt. Im Unterschied zu der in Fig. 5 gezeigten Ausführungsform ist ein Verbindungselement K3 vorgesehen, um die erste Getriebeeingangswelle 12 und die zweite Getriebeeingangswelle 14 antriebswirksam miteinander zu verbinden. Ferner ist das erste Koppelelement K1 als Reibkupplung ausgebildet. Durch das Verbindungselement K3 kann erreicht werden, dass die Verbrennungsmaschine 55 immer reibschlüssig, also über das erste Koppelelement K1, dem Hybridgetriebe 10 Antriebsleistung zuführen kann. Es ist folglich nur eine Reibkupplung K1 notwendig, um alle im Hybridgetriebe 10 vorhandenen Gangstufen reibschlüssig mittels der Verbrennungsmaschine 55 zu verwenden bzw. zu schalten. In diesem Ausführungsbeispiel dient das zweite Koppelelement K2 vorzugsweise zum Verbinden der Verbrennungsmaschine 55 mit der weiteren elektrischen Antriebsmaschine 22 bei einem sogenannten seriellen Fahrbetrieb. Mit einem reibschlüssigen Koppelelement K1 sind die folgenden Funktionen möglich: Öffnen des Koppelelements K1 unter Last, wie beispielsweise bei einer Notbremsung; rein verbrennungsmotorisches Anfahren; Anschleppen der Verbrennungsmaschine 55 während der Fahrt, um die Verbrennungsmaschine 55 zu starten; Schwungstart der Verbrennungsmaschine 55 durch die weitere elektrische Antriebsmaschine 22. Ferner ist ein Schließen des Koppelelements K1 vereinfacht, da eine Synchronisierung entfallen kann oder vorzugsweise nur eine geringe Synchronisierung erforderlich ist In Fig. 7 ist ein Schaltschema 58 der in Fig. 6 gezeigten Ausführungsform gezeigt. In der ersten Spalte ist der Schaltzustand des ersten Koppelelements K1 gezeigt. In der zweiten Spalte ist der Schaltzustand des zweiten Koppelelements K2 gezeigt. In der dritten Spalte ist der Schaltzustand des Verbindungselements K3 gezeigt. In der vierten bis achten Spalte sind die Schaltzustände der Schaltelemente E gezeigt.

In Fig. 8 ist schematisch eine vierte Variante eines erfindungsgemäßen Hybridgetriebes 10 in einem Antriebsstrang 11 gezeigt. Aus Gründen der Übersichtlichkeit ist die sich am Getriebeeingang 52 befindende Verbrennungsmaschine nicht dargestellt. In der gezeigten Ausführungsform ist die erste Getriebeeingangswelle 12 als Hohlwelle ausgebildet und die zweite Getriebeeingangswelle 14 als Vollwelle, wobei die erste Getriebeeingangswelle 12 die zweite Getriebeeingangswelle 14 zumindest teilweise umgibt. Die Gangstufen des ersten Teilgetriebes 10a sind der ersten Getriebeeingangswelle 12 zugeordnet, also mittels der als Hohlwelle ausgebildeten ersten Getriebeeingangswelle 12 dargestellt. Die Gangstufen des zweiten Teilgetriebes 10b sind mittels der als Vollwelle ausgebildeten zweiten Getriebeeingangswelle 14 dargestellt. Die Gangreihenfolge ist vom Getriebeeingang 52 aus betrachtet 4, 2, 1, 3, 5, wohingegen bei den oben gezeigten Ausführungsformen die Gangreihenfolge vom Getriebeeingang 52 aus betrachtet 5, 3, 2, 1, 4 ist.

Die elektrische Antriebsmaschine 18 ist über das Festrad 38 und das Festrad 20 mit dem ersten Teilgetriebe 10a antriebswirksam verbunden. Die weitere elektrische Antriebsmaschine 22 ist mittels des Festrads 42 und des Festrads 24 mit dem zweiten Teilgetriebe 10b antriebswirksam verbunden. Die Schaltzustände der in Fig. 8 gezeigten Ausführungsform können mittels des Schaltschemas 54, das in Fig. 2 gezeigt ist, beschrieben werden.

Es versteht sich, dass bei allen gezeigten Ausführungsformen die Schaltelemente eines Zahnradpaares auch auf einer anderen Welle als der gezeigten angeordnet werden können. Es versteht sich ferner, dass das Anbinden der elektrischen Antriebsmaschine 18 oder der weiteren elektrischen Antriebsmaschine 22 direkt oder über eine Vorübersetzung erfolgen kann. Ferner ist es auch denkbar, die elektrischen Antriebsmaschinen mittels eines Zugmittelgetriebes anzubinden. Es ist zudem denkbar, eine oder beide elektrischen Antriebsmaschinen als sogenannte Koaxialmaschinen auszubilden, bei denen eine Getriebeeingangswelle den Rotor bildet, wobei der Stator der elektrischen Maschine an einem Gehäuse drehfest angeordnet ist.

Insbesondere sind die folgenden Ausführungsvarianten denkbar:
Zumindest an einem Teilgetriebe ist eine elektrische Antriebsmaschine angebunden. An dem ersten Teilgetriebe ist eine elektrische Antriebsmaschine angebunden. An beiden Teilgetrieben ist jeweils eine elektrische Antriebsmaschine angebunden. Die elektrische Antriebsmaschine ist am Festrad des höchsten gangbildenden Radpaars angebunden.

Die elektrischen Antriebsmaschinen sind jeweils am äußersten Festrad einer Getriebe-Hauptachse angebunden, um längere achsparallele elektrische Antriebsmaschinen zu realisieren.

Der Radsatz weist zumindest 5 gangbildende Radsatzpaare auf.

Das Teilgetriebe mit dem ersten und zweiten Gang weist zumindest ein weiteres gangbildendes Radpaar auf.

Das erste Teilgetriebe weist die Gänge 1, 2 und 4 auf.

Das zweite Teilgetriebe weist die Gänge 3 und 5 auf.

Das Losrad des ersten oder zweiten Ganges weist mit einem weiteren gangbildenden Radpaar zusammen ein gemeinsames Schaltelement auf.

Die Schaltelemente A, B, C, D, E sind als formschlüssige Schaltelemente ausgeführt.

Die elektrischen Antriebsmaschinen sind achsparallel zum Antrieb angeordnet.

Die Schaltelemente E und C sind als Doppelschaltelement ausgebildet.

Die Schaltelemente A und D sind als Doppelschaltelement ausgebildet.

Die Antriebswellen sind über die Koppelelemente K1 und K2 mit der Verbrennungsmaschine verbindbar.

Die Koppelelemente K1 und K2 sind als formschlüssige Koppelelemente ausgeführt.

Die Koppelelemente K1 und K2 sind als Doppeltelement ausgeführt.

Ein Verbindungselement K3 ist vorgesehen, das die beiden Teilgetriebe miteinander verbindet.

Das Verbindungselement K3 bildet mit einem gangbildenden Radpaar vom ersten Teilgetriebe ein Doppeltelement.

Die Gänge sind vom Antrieb her in der Reihenfolge 5, 3, 2, 1, 4 oder 5, 3, 1, 2, 4 angeordnet.

Eine Parksperre ist auf einer Ritzelwelle zum Differenzial angeordnet.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus.

### Bezugszeichen

- 10: Hybridgetriebe
- 10a: erstes Teilgetriebe
- 10b: zweites Teilgetriebe
- 11: Antriebsstrang
- 12: erste Getriebeeingangswelle
- 14: zweite Getriebeeingangswelle
- 16: Vorgelegewelle
- 18: elektrische Antriebsmaschine
- 20: Festrad der elektrischen Antriebsmaschine
- 22: weitere elektrische Antriebsmaschine
- 24: Festrad der weiteren elektrischen Antriebsmaschine
- 26: Festrad der ersten Gangstufe
- 28: Losrad der ersten Gangstufe
- 30: Festrad der zweiten Gangstufe
- 32: Losrad der zweiten Gangstufe
- 34: Festrad der dritten Gangstufe
- 36: Losrad der dritten Gangstufe
- 38: Festrad der vierten Gangstufe
- 40: Losrad der vierten Gangstufe
- 42: Festrad der fünften Gangstufe
- 44: Losrad der fünften Gangstufe
- 46: erstes Abtriebszahnrad
- 48: zweites Abtriebszahnrad
- 50: Differential
- 52: Getriebeeingang
- 54: Schaltschema
- 55: Verbrennungsmaschine
- 56: Schaltschema
- 58: Schaltschema
- A: Schaltelement
- B: Schaltelement
- C: Schaltelement
- D: Schaltelement
- E: Schaltelement
- K1: erstes Koppelelement
- K2: zweites Koppelelement
- K3: Verbindungselement

## Patentansprüche

1. Hybridgetriebe (10) für einen Kraftfahrzeug-Antriebsstrang mit einer Verbrennungsmaschine (55) und einer elektrischen Antriebsmaschine (18), mit:
einem ersten Teilgetriebe (10a) mit mehreren Gangstufen und einer ersten Getriebeeingangswelle (12);
einem zweiten Teilgetriebe (10b) mit mehreren Gangstufen und einer zweiten Getriebeeingangswelle (14);
einer Vorgelegewelle (16);
mehreren Schaltelementen (A, B, C, D, E) zum Einlegen der Gangstufen (1, 2, 3, 4, 5);
einem ersten Koppelelement (K1) und einem zweiten Koppelelement (K2) zum Wirkverbinden von Wellen im Hybridgetriebe; und
in mehreren Radsatzebenen angeordneten Zahnradpaaren von Losrädern (28, 32, 36, 40, 44) und Festrädern (26, 30, 34, 38, 42) zum Bilden der Gangstufen, wobei
ein Teil der Gangstufen für die Verbrennungsmaschine einlegbar ist und ein Teil der Gangstufen für die elektrische Antriebsmaschine einlegbar ist;
die Zahnradpaare zum Bilden der Gangstufen mit der niedrigsten und zweitniedrigsten Übersetzung dem ersten Teilgetriebe fest zugeordnet sind, sodass die Gangstufen Antriebsleistung übersetzen, die nur mittels der ersten Getriebeeingangswelle in das Hybridgetriebe eingebracht wird;
die erste Getriebeeingangswelle (12) mittels des ersten Koppelelements (K1) und die zweite Getriebeeingangswelle (14) mittels des zweiten Koppelelements (K2) mit der Verbrennungsmaschine wirkverbindbar sind; und
das erste und das zweite Koppelelement (K1, K2) als formschlüssige Koppelelemente ausgebildet sind.

2. Hybridgetriebe (10) nach dem vorheringe Anspruch, wobei ein Zahnradpaar der Gangstufen größer als die zweite Gangstufe an einem anderen Teilgetriebe angeordnet ist als die Zahnradpaare benachbarter Gangstufen.

3. Hybridgetriebe (10) nach einem der vorherigen Ansprüche, wobei das erste Teilgetriebe (10a) und/oder das zweite Teilgetriebe (10b) dazu ausgebildet ist, einen Kraftübertragungspfad mit der elektrischen Antriebsmaschine (18) und/oder einer weiteren elektrischen Antriebsmaschine (22) einzurichten.

4. Hybridgetriebe (10) nach dem vorherigen Anspruch, wobei das erste Teilgetriebe (10a) und/oder das zweite Teilgetriebe (10b) dazu ausgebildet ist, den Kraftübertragungspfad an dem Festrad (38) des Radpaares, das die höchste Gangstufe auf dem ersten und/oder zweiten Teilgetriebe bildet, einzurichten.

5. Hybridgetriebe (10) nach einem der Ansprüche 3 oder 4, wobei ein an einem axialen Ende des Hybridgetriebes angeordnetes Festrad (38, 42) dazu ausgebildet ist, einen Kraftübertragungspfad mit der elektrischen Antriebsmaschine (18) und/oder der weiteren elektrischen Antriebsmaschine (22) einzurichten.

6. Hybridgetriebe (10) nach einem der vorherigen Ansprüche, wobei
das Losrad (28, 32) einer ersten und/oder einer zweiten Gangstufe mit einem weiteren gangbildenden Zahnradpaar zusammen ein gemeinsames Schaltelement aufweist;
die Schaltelemente (A, B, C, D, E) als formschlüssige Schaltelemente ausgeführt sind; und/oder
wenigstens zwei Schaltelemente (E, C, A, D) als Doppelschaltelemente (EC, AD) ausgebildet sind.

7. Hybridgetriebe (10) nach dem vorherigen Anspruch, wobei das erste und das zweite Koppelelement von einem doppeltwirkenden Aktuator betätigbar sind.

8. Hybridgetriebe (10) nach einem der vorherigen Ansprüche, mit einem Verbindungselement (K3) zum antriebswirksamen Verbinden der ersten Getriebeeingangswelle (12) und der zweiten Getriebeeingangswelle (14).

9. Hybridgetriebe (10) nach einem der vorherigen Ansprüche, wobei die erste Getriebeeingangswelle (12) und die zweite Getriebeeingangswelle (14) koaxial zueinander angeordnet sind; und
eine der Getriebeeingangswellen als Hohlwelle ausgebildet ist und zumindest abschnittsweise die andere Getriebeeingangswelle umgibt.

10. Kraftfahrzeug-Antriebsstrang (11) mit:
einer Verbrennungsmaschine (55) zum Bereitstellen von Antriebsleistung;
einer elektrischen Antriebsmaschine (18) zum Bereitstellen von Antriebsleistung; und
einem Hybridgetriebe (10) nach einem der vorherigen Ansprüche.

11. Kraftfahrzeug-Antriebsstrang (11) nach dem vorherigen Anspruch, mit einer weiteren elektrischen Antriebsmaschine (22) zum Bereitstellen von Antriebsleistung.

12. Kraftfahrzeug-Antriebsstrang (11) nach Anspruch 11, wobei das Hybridgetriebe fünf Gangstufen (1, 2, 3, 4, 5) aufweist; und
alle Gangstufen für die Verbrennungsmaschine (55) und die elektrische Antriebsmaschine (18) einlegbar sind.

13. Kraftfahrzeug-Antriebsstrang (11) nach einem der Ansprüche 10 bis 12, wobei die elektrische Antriebsmaschine und/oder die weitere elektrische Antriebsmaschine achsparallel zu der ersten und/oder zweiten Getriebeeingangswelle angeordnet ist.

## Claims

1. Hybrid transmission (10) for a motor vehicle drive train with an internal combustion engine (55) and with an electric drive machine (18), having:
a first sub-transmission (10a) with multiple gear stages and a first transmission input shaft (12);
a second sub-transmission (10b) with multiple gear stages and a second transmission input shaft (14);
a countershaft (16);
multiple shift elements (A, B, C, D, E) for engagement of the gear stages (1, 2, 3, 4, 5);
a first coupling element (K1) and a second coupling element (K2) for operative connection of shafts in the hybrid transmission; and
toothed gearwheel pairs of idler gearwheels (28, 32, 36, 40, 44) and fixed gearwheels (26, 30, 34, 38, 42) for forming the gear stages, which toothed gearwheel pairs are arranged in multiple gearwheel set planes, wherein
some of the gear stages are able to be engaged for the internal combustion engine and some of the gear stages are able to be engaged for the electric drive machine;
the toothed gearwheel pairs for forming the gear stages with the lowest and second lowest transmission ratios are fixedly assigned to the first sub-transmission, so that the gear stages transmit drive power which is introduced into the hybrid transmission only by means of the first transmission input shaft;
the first transmission input shaft (12) is operatively connectable to the internal combustion engine by means of the first coupling element (K1) and the second transmission input shaft (14) is operatively connectable to the internal combustion engine by means of the second coupling element (K2); and
the first and second coupling elements (K1, K2) are designed as form-fitting coupling elements.

2. Hybrid transmission (10) according to the preceding claim, wherein a toothed gearwheel pair of the gear stages higher than the second gear stage is arranged at a different sub-transmission from the toothed gearwheel pairs of adjacent gear stages.

3. Hybrid transmission (10) according to either of the preceding claims, wherein the first sub-transmission (10a) and/or the second sub-transmission (10b) are/is configured to set up a force-transmission path with the electric drive machine (18) and/or a further electric drive machine (22).

4. Hybrid transmission (10) according to the preceding claim, wherein the first sub-transmission (10a) and/or the second sub-transmission (10b) are/is configured to set up the force-transmission path at the fixed gearwheel (38) of the gearwheel pair which forms the highest gear stage at the first and/or second sub-transmission.

5. Hybrid transmission (10) according to either of Claims 3 and 4, wherein a fixed gearwheel (38, 42) arranged on an axial end of the hybrid transmission is configured to set up a force-transmission path with the electric drive machine (18) and/or the further electric drive machine (22).

6. Hybrid transmission (10) according to one of the preceding claims, wherein
the idler gearwheel (28, 32) of a first and/or of a second gear stage has together with a further gear-forming toothed gearwheel pair a common shift element;
the shift elements (A, B, C, D, E) are designed as form-fitting shift elements; and/or
at least two shift elements (E, C, A, D) are designed as double shift elements (EC, AD).

7. Hybrid transmission (10) according to the preceding claim, wherein the first and second coupling elements are actuatable by a double-acting actuator.

8. Hybrid transmission (10) according to one of the preceding claims, having a connecting element (K3) for drive connection of the first transmission input shaft (12) and the second transmission input shaft (14).

9. Hybrid transmission (10) according to one of the preceding claims, wherein the first transmission input shaft (12) and the second transmission input shaft (14) are arranged coaxially with respect to one another; and
one of the transmission input shafts is designed as a hollow shaft and at least sectionally surrounds the other transmission input shaft.

10. Motor vehicle drive train (11) having:
an internal combustion engine (55) for providing drive power;
an electric drive machine (18) for providing drive power; and
a hybrid transmission (10) according to one of the preceding claims.

11. Motor vehicle drive train (11) according to the preceding claim, having a further electric drive machine (22) for providing drive power.

12. Motor vehicle drive train (11) according to Claim 11, wherein
the hybrid transmission has five gear stages (1, 2, 3, 4, 5); and
all the gear stages are able to be engaged for the internal combustion engine (55) and the electric drive machine (18).

13. Motor vehicle drive train (11) according to one of Claims 10 to 12, wherein
the electric drive machine and/or the further electric drive machine are/is arranged axially parallel to the first and/or second transmission input shaft.

## Revendications

1. Transmission hybride (10) pour une chaîne cinématique de véhicule à moteur comportant un moteur à combustion interne (55) et un moteur d'entraînement électrique (18), comportant :
une première transmission partielle (10a) comportant plusieurs rapports de vitesses et un premier arbre d'entrée de transmission (12) ;
une deuxième transmission partielle (10b) comportant plusieurs rapports de vitesses et un deuxième arbre d'entrée de transmission (14) ;
un arbre intermédiaire (16) ;
plusieurs éléments de changement de vitesses (A, B, C, D, E) servant à l'enclenchement des rapports de vitesses (1, 2, 3, 4, 5) ;
un premier élément d'accouplement (K1) et un deuxième élément d'accouplement (K2) servant à la liaison fonctionnelle d'arbres dans la transmission hybride ; et
des paires de roues dentées, disposées dans plusieurs plans d'ensembles de roues, constituées de roules folles (28, 32, 36, 40, 44) et de roues fixes (26, 30, 34, 38, 42) servant à la formation des rapports de vitesses, dans laquelle
une partie des rapports de vitesses peuvent être enclenchés pour le moteur à combustion interne et une partie des rapports de vitesses peuvent être enclenchés pour le moteur d'entraînement électrique ;
les paires de roues dentées servant à la formation des rapports de vitesses présentant le rapport de transmission le plus bas et le deuxième rapport de transmission le plus bas étant associées fixement à la première transmission partielle, de sorte que les rapports de vitesses transmettent une puissance d'entraînement qui n'est introduite dans la transmission hybride que seulement au moyen du premier arbre d'entrée de transmission ;
le premier arbre d'entrée de transmission (12) peut être relié fonctionnellement au moteur à combustion interne au moyen du premier élément d'accouplement (K1) et le deuxième arbre d'entrée de transmission (14) peut être relié fonctionnellement au moteur à combustion interne au moyen du deuxième élément d'accouplement (K2) ; et
le premier et le deuxième élément d'accouplement (K1, K2) sont réalisés sous forme d'éléments d'accouplement à engagement par complémentarité de formes.

2. Transmission hybride (10) selon la revendication précédente, dans laquelle une paire de roues dentées des rapports de vitesses supérieurs au deuxième rapport de vitesses est disposée sur une autre transmission partielle que les paires de roues dentées de rapports de vitesses adjacents.

3. Transmission hybride (10) selon l'une des revendications précédentes, dans laquelle la première transmission partielle (10a) et/ou la deuxième transmission partielle (10b) est/sont réalisée(s) pour créer une voie de transfert de force avec le moteur d'entraînement électrique (18) et/ou un autre moteur d'entraînement électrique (22).

4. Transmission hybride (10) selon la revendication précédente, dans laquelle la première transmission partielle (10a) et/ou la deuxième transmission partielle (10b) est/sont réalisée(s) pour créer la voie de transfert de force au niveau de la roue fixe (38) de la paire de roues qui forme le rapport de vitesses le plus haut sur la première et/ou la deuxième transmission partielle.

5. Transmission hybride (10) selon l'une des revendications 3 ou 4, dans laquelle une roue fixe (38, 42) disposée à une extrémité axiale de la transmission hybride est réalisée pour créer une voie de transfert de force avec le moteur d'entraînement électrique (18) et/ou l'autre moteur d'entraînement électrique (22).

6. Transmission hybride (10) selon l'une des revendications précédentes, dans laquelle
la roue folle (28, 32) d'un premier et/ou d'un deuxième rapport de vitesses présente, conjointement avec une autre paire de roues dentées formant un rapport, un élément de changement de vitesses commun ;
les éléments de changement de vitesses (A, B, C, D, E) sont réalisés sous forme d'éléments de changement de vitesses à engagement par complémentarité de formes ; et/ou
au moins deux éléments de changement de vitesses (E, C, A, D) sont réalisés sous forme d'éléments de changement de vitesses doubles (EC, AD).

7. Transmission hybride (10) selon la revendication précédente, dans laquelle le premier et le deuxième élément d'accouplement peuvent être actionnés par un actionneur à double action.

8. Transmission hybride (10) selon l'une des revendications précédentes, comportant un élément de liaison (K3) servant à la liaison d'entraînement du premier arbre d'entrée de transmission (12) et du deuxième arbre d'entrée de transmission (14).

9. Transmission hybride (10) selon l'une des revendications précédentes, dans laquelle le premier arbre d'entrée de transmission (12) et le deuxième arbre d'entrée de transmission (14) sont disposés coaxialement l'un par rapport à l'autre ; et
l'un des arbres d'entrée de transmission est réalisé sous forme d'arbre creux et entoure l'autre arbre d'entrée de transmission au moins dans certaines parties.

10. Chaîne cinématique de véhicule à moteur (11) comportant :
un moteur à combustion interne (55) servant à la fourniture d'une puissance d'entraînement ;
un moteur d'entraînement électrique (18) servant à la fourniture d'une puissance d'entraînement ; et
une transmission hybride (10) selon l'une des revendications précédentes.

11. Chaîne cinématique de véhicule à moteur (11) selon la revendication précédente, comportant un autre moteur d'entraînement électrique (22) servant à la fourniture d'une puissance d'entraînement.

12. Chaîne cinématique de véhicule à moteur (11) selon la revendication 11, dans laquelle
la transmission hybride présente cinq rapports de vitesses (1, 2, 3, 4, 5) ; et
tous les rapports de vitesses peuvent être enclenchés pour le moteur à combustion interne (55) et le moteur d'entraînement électrique (18).

13. Chaîne cinématique de véhicule à moteur (11) selon l'une des revendications 10 à 12, dans laquelle le moteur d'entraînement électrique et/ou l'autre moteur d'entraînement électrique sont disposés de manière axialement parallèle au premier et/ou au deuxième arbre d'entrée de transmission.
